# EUROPÄISCHE PATENTSCHRIFT

(11) **EP 2 363 225 B1**
(45) Veröffentlichungstag und Bekanntmachung des Hinweises auf die Patenterteilung: **29.04.2015**
(21) Anmeldenummer: 11156541.2
(22) Anmeldetag: 02.03.2011
(51) Int. Cl.: B23B 31/16, B23Q 1/00

(54) **Nullpunktspannsystem**
Zero point clamping system
Système de serrage à point zéro

(30) Priorität: 05.03.2010 DE 102010010898
(43) Veröffentlichungstag der Anmeldung: 07.09.2011
(73) Patentinhaber: Schunk GmbH & Co. KG Spann- und Greiftechnik, 74348 Lauffen am Neckar (DE)
(72) Erfinder: Schräder, Philipp, 88512 Mengen (DE)
(74) Vertreter: DREISS Patentanwälte PartG mbB

(56) Entgegenhaltungen:
- DE-C- 882 790
- US-A- 2 832 604
- US-A1- 2006 290 043

## Beschreibung

Die Erfindung betrifft ein Nullpunktspannsystem nach dem Oberbegriff des Anspruchs 1. Ein solches Nullpunktspannsystem is aus EP 1 886 751 B1 bekannt. Nullpunktspannsysteme sind in vielfältiger Art und Weise vorbekannt.

Bei derartigen Nullpunktspannsystemen, wie sie beispielsweise aus der EP 1 886 751 B1 vorbekannt sind, ist der Spannbolzen in die Spannaufnahme einführbar und die Verrieglungskörper in radialer Richtung in eine Verriegelungslage insbesondere derart verlagerbar, dass sie in einer radial inneren Verriegelungslage gegen den in der Spannaufnahme vorhandenen Spannbolzen wirken und zudem das Trägerteil in axialer Richtung gegen das Gehäuse beaufschlagt wird. In der radial äußeren Freigabelage kann der Spannbolzen aus der Aufnahme entnommen werden.

Aus der US 2006/0290043 A1 ist ein Werkstückhaltesystem bekannt, bei dem Werkstücke unmittelbar zentrisch gehalten werden. Aus der DE 882 790 C ist ein selbstzentrierendes Backenfutter für insbesondere Drehbänke bekannt

Der Erfindung liegt die Aufgabe zugrunde, ein Nullpunktspannsystem bereitzustellen, das möglichst flach baut und dennoch funktionssicher arbeitet. Dabei sollen die einzelnen Spannschieber synchron vom Stellglied möglichst bauraumsparend betätigt werden.

Diese Aufgabe wird durch ein Nullpunktspannsystem mit den Merkmalen des Anspruchs 1 gelöst. Erfindungsgemäß ist folglich vorgesehen, dass das Stellglied als ein um die Mittellängsachse verdrehbar angeordneter Treibring ausgebildet ist. Der Treibring kann dabei insbesondere als ebener und flach ausgebildeter, vorzugsweise geschlossener Treibring ausgebildet sein. Über das Verdrehen des Treibrings können, durch eine geeignete Bewegungskopplung, die Verriegelungskörper synchron in ihrer radialen Lage verlagert werden. Die verdrehbare Anordnung des Treibrings hat dabei den Vorteil, dass selbst bei größeren Verdrehwegen des Treibrings kein zusätzlicher Bauraum beansprucht wird. Als Verrieglungskörper können insbesondere Spannschieber oder Verriegelungskugeln Verwendung finden.

Dabei ist vorgesehen, dass zum Verdrehen des Treibrings wenigstens ein mit dem Treibring bewegungsgekoppelter, in dessen Längsrichtung verlagerbarer Stellkolben vorgesehen ist, wobei der Stellkolben insbesondere wenigstens im Wesentlichen tangential zu einer um die Mittellängsachse verlaufenden Kreisbahn angeordnet ist. Über einen derartigen Stellkolben kann der Treibring auf geeignete Weise funktionssicher verdreht werden. Der Stellkolben ist vorzugsweise im Gehäuse in dessen Axialrichtung verlagerbar angeordnet. Um eine gleichmäßige Krafteinleitung zur Verdrehung des Drehkörpers zu erreichen, ist denkbar, dass mehrere Stellkolben, insbesondere drei Stellkolben, um den Treibring entsprechend vorgesehen sind.

Eine vorteilhafte Anordnung ergibt sich dann, wenn der Treibring, die Verriegelungskörper und/oder der wenigstens eine Stellkolben wenigstens im Wesentlichen in einer senkrecht zur Mittellängsachse verlaufenden Ebene liegen. Gerade durch eine solche Anordnung kann ein vergleichsweise flachbauendes Spannsystem bereitgestellt werden.

Die Erfindung sieht ferner vor, dass der Stellkolben derart federbeaufschlagt ist, dass die Verriegelungskörper in die Verriegelungslage gedrängt werden. Hierdurch kann erreicht werden, dass das Spannsystem sich grundsätzlich in seiner Verriegelungslage befindet. Durch die Wahl entsprechend starker Federn können entsprechend hohe Schließkräfte bereitgestellt werden.

Zur Bewegungskopplung des Stellkolbens mit dem Treibring ist vorteilhaft, wenn der wenigstens eine Stellkolben beziehungsweise der Treibring einen quer zu dessen Längsachse verlaufenden Einschnitt beziehungsweise eine mit dem Einschnitt zusammenwirkende, in radialer Richtung überstehende Nase aufweist. Durch Eingreifen der Nase in den Einschnitt wird folglich die Linearbewegung des Stellkolbens in eine Drehbewegung des Treibrings umgesetzt.

Vorteilhafterweise sind die Nase am Treibring und der Einschnitt am Stellkolben vorgesehen. Andererseits ist auch denkbar, dass die Nase am Stellkolben und der Einschnitt am Treibring angebracht sind. Grundsätzlich können auch andere Arten der Bewegungskopplung zwischen Stellkolben und Treibring vorgesehen sein. Auch eine zahnstangenartige Ausbildung am Stellkolben ist denkbar, welche dann mit einem wenigstens abschnittsweise am Treibring vorgesehenen, umlaufenden Ritzelabschnitt zusammenwirkt.

Bei einer erfindungsgemäßen Ausführungsform kann vorgesehen sein, dass der wenigstens eine Stellkolben zu dessen axialer Verlagerung mechanisch betätigbar ist. Dazu ist vorteilhafterweise denkbar, dass der Stellkolben einen ersten, um dessen Längsachse verdrehbaren und in seiner Axiallage gesicherten Stellkolbenabschnitt und einen zweiten, um dessen Drehachse verdrehgesicherten und in seiner Axiallage verlagerbaren Stellkolbenabschnitt derart aufweist, dass beim Verdrehen des ersten Stellkolbenabschnitts der zweite Stellkolbenabschnitt axial verlagert wird. Der erste, verdrehbare Stellkolbenabschnitt kann dabei insbesondere einen Eingriffsabschnitt für ein manuell betätigbares Werkzeug oder für einen Motorantrieb aufweisen. Insbesondere kommt als Eingriffsabschnitt ein Innensechskant in Betracht. Zur Kopplung der beiden Stellkolbenabschnitte weisen diese vorzugsweise einander zugewandte und aneinander anliegende, schräg zu deren Mittellängsachsen verlaufende Kontaktabschnitte auf. Durch Verdrehen des ersten Stellkolbenabschnitts kann hierdurch erreicht werden, dass der zweite Stellkolbenabschnitt axial verlagert wird. Aufgrund der vorzugsweise federbeaufschlagten Anordnung des zweiten Stellkolbenabschnitts erfolgt die axiale Verlagerung des zweiten Stellkolbenabschnitts in die eine Richtung entgegen der Federbeaufschlagung und in die andere Richtung mit der Federbeaufschlagung. Hierdurch kann zudem ein Anliegen des ersten Stellkolbenabschnitts am zweiten Stellkolbenabschnitt gewährleistet werden.

Zur Verdrehbegrenzung des ersten Stellkolbenabschnitts können Verdrehsicherungsmittel vorgesehen sein. Beispielsweise können am ersten Stellkolbenabschnitt in radialer Richtung abstehende Abschnitte angebracht sein, die in der Drehendlage gegen einen gehäuseseitigen Anschlag wirken und ein weiteres Verdrehen des ersten Kolbenabschnitts unterbinden.

Bei einer weiteren Ausführungsform der Erfindung ist vorgesehen, dass wenigstens der eine Stellkolben einen Druckraum begrenzt, der zur axialen Verlagerung des Stellkolbens pneumatisch oder hydraulisch druckbeaufschlagbar ist. Bei Vorsehen von mehreren Stellkolben ist denkbar, dass diese jeweils einen identisch ausgebildeten Druckraum begrenzen, wobei mehrere Druckräume dann miteinander druckverbunden sind. Hierdurch wird dann ein synchrones Beaufschlagen der Druckräume mit entsprechendem Fluid ermöglicht.

Beim Druckbeaufschlagen des jeweiligen Druckraums wird dann der jeweilige Stellkolben entgegen der Federbeaufschlagung derart bewegt, dass die Verriegelungskörper in ihre Freigabelage überführt werden. Bei Drucklosschalten des Druckraums kehren dann die Verriegelungskörper aufgrund der Federbeaufschlagung der Stellkolben in ihre Verriegelungslage zurück.

Zur Bewegungskopplung des Treibrings mit den Verriegelungskörpern ist vorteilhaft, wenn am Treibring beziehungsweise an den Verriegelungskörpern Führungsnuten beziehungsweise in die Führungsnuten eingreifende Nocken derart vorgesehen sind, dass beim Verdrehen des Treibrings die Verriegelungskörper in radialer Richtung bewegt werden. Die Führungsnuten sind dabei vorzugsweise in einer senkrecht zur Mittellängsachse verlaufenden Ebene angeordnet und erstrecken sich schräg zu einer Tangentiallinie, die an einer um die Mittellängsachse verlaufenden Kreisbahn anliegt. Je nach Schräge ändert sich das Übersetzungsverhältnis zwischen der Drehbewegung des Treibrings und der Radialbewegung der Verriegelungskörper. Vorzugsweise sind die Führungsnuten nicht entlang einer geraden Linie verlaufend angeordnet, sondern derart gebogen, dass in der Verriegelungslage eine Kraftverstärkung erreicht wird.

Dabei ist vorteilhaft, wenn das Gehäuse Führungsabschnitte zur Bewegungsführung der Stellschieber, Führungsabschnitte zur Bewegungsführung des wenigstens einen Stellkolbens und/oder Führungsabschnitte zur Bewegungsführung des Treibrings aufweist. Hierdurch kann die Gesamtzahl der vorzusehenden Bauteile erheblich reduziert werden.

Weitere Einzelheiten und vorteilhafte Ausgestaltungen der Erfindung sind der nachfolgenden Beschreibung zu entnehmen, anhand derer die in den Figuren dargestellten Ausführungsbeispiele näher beschrieben und erläutert sind.

Es zeigen:
- Figur 1: ein erfindungsgemäßes Nullpunktspannsystem mit einem Spannbolzen;
- Figur 2: eine Innenansicht des Spannsystems gemäß Figur 1 in der Verriegelungslage;
- Figur 3: einen Längsschnitt durch das Spannsystem gemäß Figur 2;
- Figur 4: einen Querschnitt durch das Spannsystem gemäß Figur 3;
- Figuren 5 bis 7: Ansichten entsprechend den Figuren 2 bis 4 in der Freigabelage;
- Figur 8: das Grundgehäuse des Systems gemäß Figuren 1 bis 7;
- Figur 9: den Treibring des Systems gemäß den Figuren 1 bis 7;
- Figur 10: Spannschieber des Systems gemäß den Figuren 1 bis 7;
- Figur 11: Stellkolben des Systems gemäß Figuren 1 bis 7;
- Figur 12: ein zweites Spannsystem in einer Ansicht gemäß Figur 2 in der Verriegelungslage;
- Figur 13: einen Querschnitt des Systems gemäß Figur 12 gemäß Figur 3;
- Figur 14: einen Querschnitt des Systems gemäß Figur 12 gemäß Figur 4;
- Figur 15: die Ansicht gemäß Figur 12 in der Freigabelage;
- Figur 16: den Schnitt gemäß Figur 13 in der Freigabelage;
- Figur 17: den Schnitt gemäß Figur 14 in der Freigabelage und
- Figur 18: verschiedene Ansichten der Stellkolbenabschnitte eines Stellkolbens gemäß den Figuren 12 bis 17.

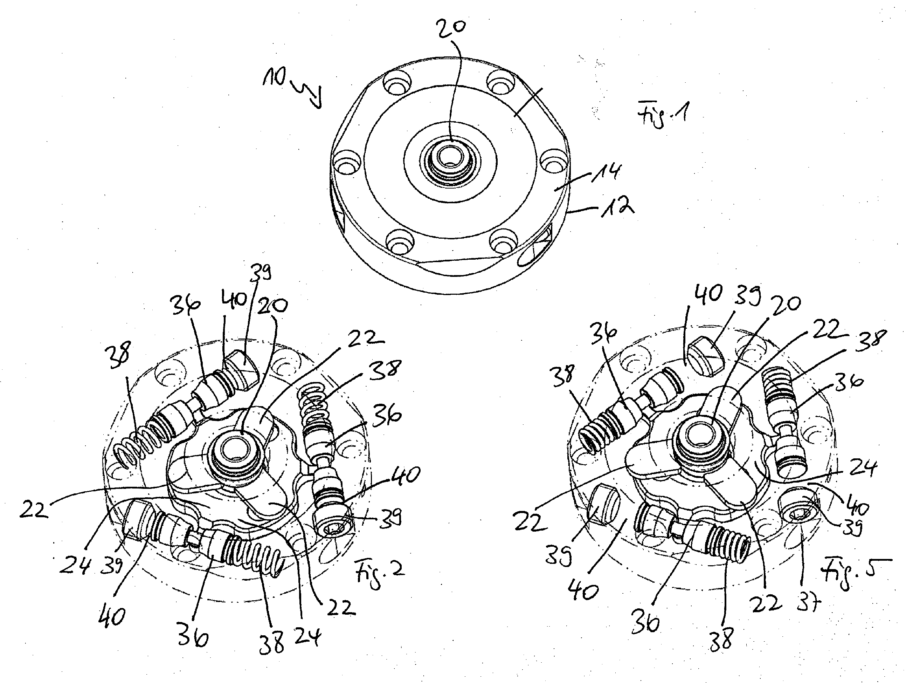

Das in den Figuren 1 bis 7 dargestellte Spannsystem in Form eines Nullpunktspannsystems 10 umfasst ein Gehäuse 12, welches aus einem Gehäusegrundkörper 14 und einem Deckel 16 besteht. Das Gehäuse 12 bzw. das Gehäusegrundkörper 14 weist eine zentrale Aufnahme 18 auf, in welcher in den Figuren 1 bis 7 ein Spannbolzen 20 eingeführt ist. Zur sicheren Fixierung des Spannbolzens 20 in der Aufnahme 18 sieht das Nullpunktspannsystem 10 insgesamt drei Spannschieber 22 vor, die in radialer Richtung verlagerbar sind. In der radial inneren Position befinden sich die Spannschieber 22 in einer Verriegelungslage. In der radial äußeren Position wird der Spannbolzen 20 freigegeben; die Spannschieber 22 befinden sich in einer Freigabelage. Die Verriegelungslage ist in den Figuren 2 bis 4 dargestellt. Die Freigabelage in den Figuren 5 bis 7.

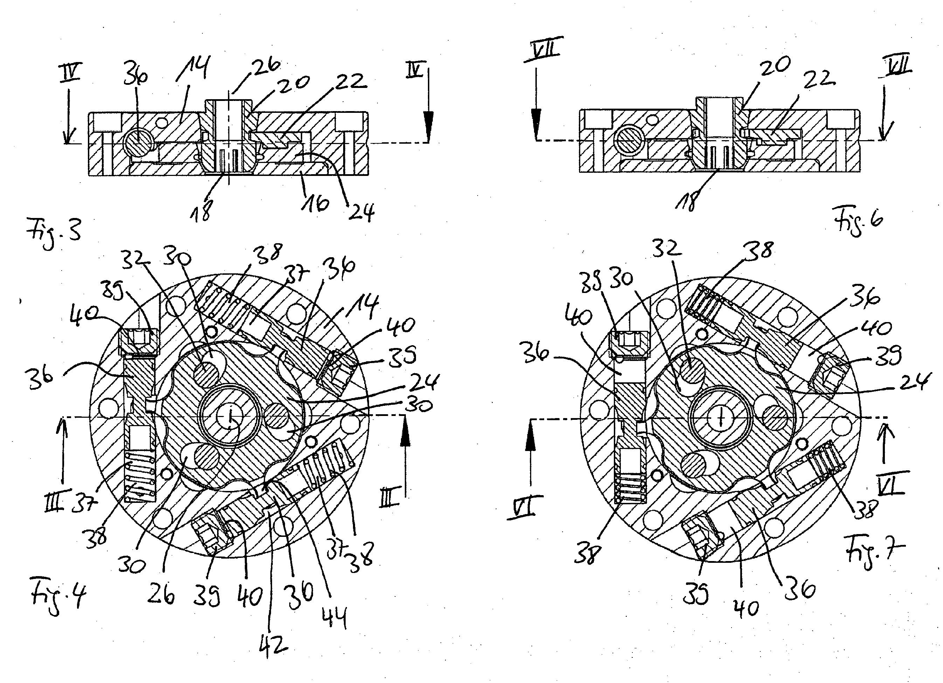

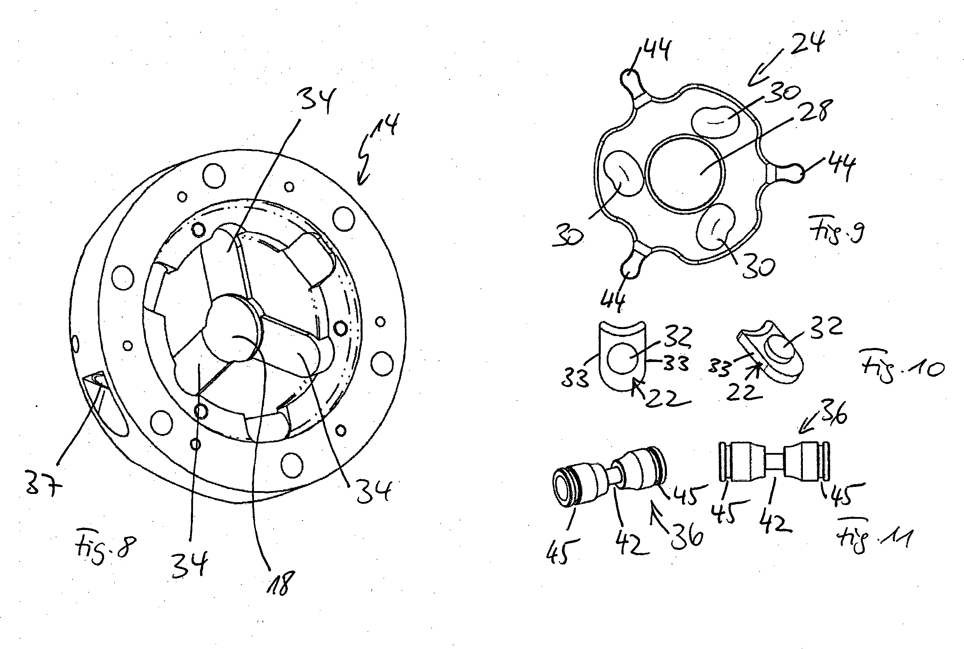

Die Spannschieber 22 werden über einen ringartig ausgebildeten Treibring 24 betätigt. Der Treibring 24 ist um die Mittellängsachse 26 verdrehbar gelagert und mit den Spannschiebern 22 bewegungsgekoppelt. Durch ein Verdrehen des Treibrings 24 werden folglich die Spannschieber 22 in radialer Richtung bewegt. Der Treibring 24 selbst weist in seinem zentralen Bereich eine Kreisaussparung 28 auf, die Teil der Spannaufnahme 18 ist und in welche, wie in Figur 3 deutlich wird, der Spannbolzen 20 einführbar ist. Dies wird auch aus Figur 9 deutlich, welche die Draufsicht auf den Treibring 24 zeigt.

Der Treibring 24 als solcher ist als ebenes und flach ausgebildetes Ringelement realisiert.

Zur Bewegungskopplung des Treibrings 24 mit den Spannschiebern 22 sieht der Treibring 24 insgesamt drei Führungsnuten 30 auf. Die Führungsnuten 30 verlaufen dabei nicht entlang jeweils einer geraden Linie, sondern sind, wie insbesondere aus Figur 9 deutlich wird, gekrümmt ausgebildet. In die Führungsnuten 30 greifen spannbolzenseitig angeordnete Nocken 32 ein. Die Führungsnuten 30 sind dabei derart ausgebildet und wirken mit den Nocken 32 derart zusammen, dass beim Verdrehen des Treibrings 24 die Spannschieber 22 in radialer Richtung bewegt werden. Aufgrund der Krümmung der Führungsnuten 30 findet hin zur Verriegelungslage eine Kraftverstärkung statt.

Wie insbesondere aus dem in Figur 8 als Einzelteil dargestellten Gehäusegrundkörper 14 deutlich wird, weist dieser in radialer Richtung verlaufende Führungsausnehmungen 34 für die Spannschieber 22 auf. Insofern werden die Spannschieber 22 von den Führungsausnehmungen 34 beim Verdrehen des Treibrings 24 in radialer Richtung zwangsgeführt.

Im Gehäusegrundkörper 14 sind insgesamt drei Stellkolben 36 angeordnet. Das Gehäuse 12 bzw. der Gehäusegrundkörper 14 sieht dazu insgesamt drei in den Gehäusegrundkörper 14 eingebrachte, sacklochartig ausgebildete Zylinderausnehmungen 37 vor. Die Zylinderausnehmungen 37 und die Stellkolben 36 sind dabei im Wesentlichen tangential zu einer um die Mittellängsachse 26 verlaufenden Kreisbahn, wie insbesondere aus Figur 4 deutlich wird, angeordnet. Die Stellkolben 36 sind im Gehäuse entlang ihrer jeweiligen Längsachse axial verlagerbar angeordnet. Wie insbesondere aus den Figuren 2 und 4 deutlich wird sind die Stellkolben 36 einerends mittels einem Federelement 38 federbeaufschlagt. Andererends begrenzen die Stellkolben 36 jeweils einen Druckraum 40, der mit einem Druckfluid beaufschlagbar ist. Die Federelemente 38 stützen sich dabei einerends am Boden der Zylinderausnehmungen 37 und anderends an den Stellkolben 36 ab. Auf der den Stellkolben 36 und den Federelementen 38 abgewandten Seiten sind die Druckräume 40 mittels Verschlussmittel 39 in Form von Schrauben verschlossen.

Für den Fall, dass als Druckfluid Druckluft Verwendung findet, sind vorzugsweise alle drei Druckräume mittels entsprechenden Kanälen miteinander verbunden und dadurch synchron druckbeaufschlagbar. Für den Fall, dass als Druckfluid Hydrauliköl Verwendung findet, ist denkbar, dass die Beaufschlagung von lediglich einem Druckraum 40 ausreichend ist, um eine ausreichend hohe Betätigungskraft zur Verfügung zu stellen.

Zur Bewegungskopplung der Stellkolben 36 mit dem Treibring 24 sehen die Stellkolben 36 jeweils einen quer zu deren Längsachse verlaufenden Einschnitt 42 vor. In den jeweiligen Einschnitt 42 greift jeweils eine in radialer Richtung überstehende Nase 44 des Treibrings 24. Beim axialen Verlagern von wenigstens einem Stellkolben 36 werden die anderen Stellkolben folglich über den Treibring 24 zwangsbewegt.

Die Federbeaufschlagung der Stellkolben 36 ist dabei so gewählt, dass die Spannschieber 22 über den Treibring 24 aufgrund der Federbeaufschlagung in deren Verriegelungslage gedrängt werden. Durch Druckbeaufschlagung von wenigstens einem Druckraum 40 werden die Stellkolben 36 entgegen der Federbeaufschlagung bewegt und die Spannschieber 22 in ihre Freigabelage verlagert.

Die Treibringseitigen Nasen 44 und die Führungsnuten 30 sind in Figur 9 deutlich zu erkennen. Figur 10, welche die Spannschieber 22 als Einzelteil darstellt, zeigt insbesondere die spannschieberseitigen Nocken 32. Ebenso wird deutlich, dass die Spannschieber 22 parallel zueinander verlaufende Führungskanten 33 aufweisen, die im verbauten Zustand mit den Führungsausnehmungen 34 zur radialen Führung der Spannschieber 22 zusammenwirken. In Figur 11, in welcher zwei Stellkolben 36 als Einzelteile dargestellt sind, sind die Einschnitte 42, welche mit den Nasen 44 zusammenwirken, deutlich zu erkennen. Ferner sind Ringnuten 45 erkennbar, in welche Dichtringe einsetzbar sind.

Während in Figur 3 deutlich zu erkennen ist, dass sich die Spannschieber 22 in der Verriegelungslage befinden, ist in Figur 6 deutlich zu erkennen, dass sich die Spannschieber 22 in der Freigabelage befinden und der Spannbolzen 20 aus der Aufnahme 18 entnommen werden kann.

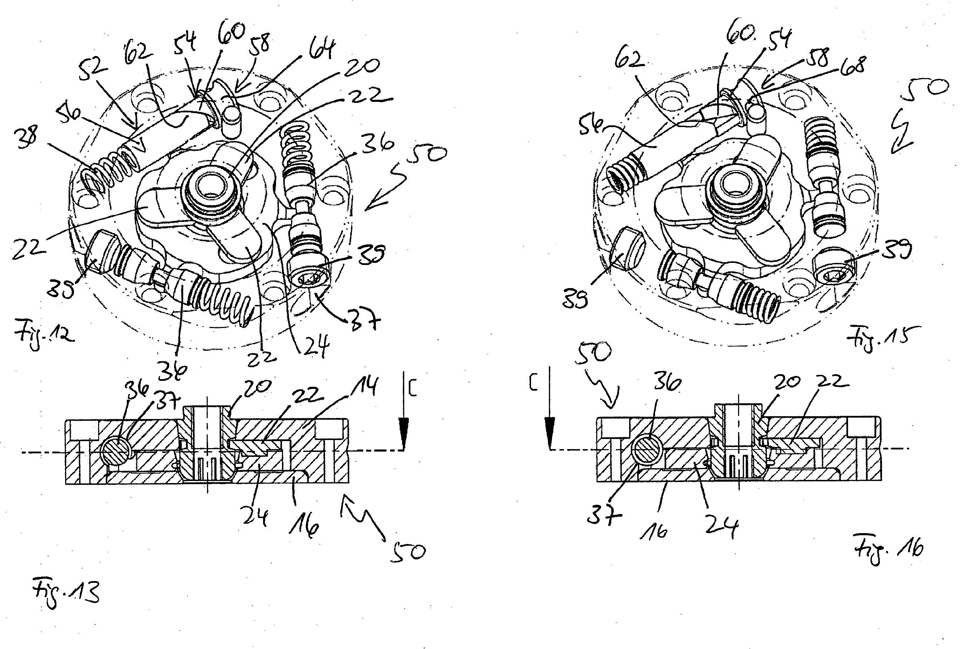

Das in den Figuren 12 bis 17 dargestellte Nullpunktspannsystem 50 ist im Wesentlichen identisch mit dem Nullpunktspannsystem 10 gemäß den Figuren 1 bis 11 ausgebildet. Entsprechende Bauteile sind mit entsprechenden Bezugszeichen versehen. Das Nullpunktspannsystem 50 unterscheidet sich vom Nullpunktspannsystem 10 dadurch, dass ein Stellkolben 52 vorgesehen ist, der zu dessen axialer Verlagerung mechanisch betätigbar ist.

Der Stellkolben 52 umfasst dabei einen ersten Stellkolbenabschnitt 54 und einen zweiten Stellkolbenabschnitt 56. Der erste Stellkolbenabschnitt 54 ist verdrehbar angeordnet, allerdings in seiner axialen Lage gesichert. Der zweite Stellkolbenabschnitt 56 ist verdrehsicher angeordnet, allerdings in seiner Axiallage verlagerbar. Die beiden Abschnitte 54 und 56 sind derart ausgebildet, dass durch Verdrehen des ersten Stellkolbenabschnitts 54 der zweite Stellkolbenabschnitt 56 axial verlagert wird. Zum Verdrehen des Stellkolbenabschnitts 54 weist dieser einen in den Figuren nicht näher gezeigten Eingriffsabschnitt 58 auf, beispielsweise in Form eines Innensechskants. Über diesen Eingriffsabschnitt 58 kann der Stellkolben 52, beziehungsweise dessen Stellkolbenabschnitt 54 manuell oder mittels eines Motorantriebs betätigt werden.

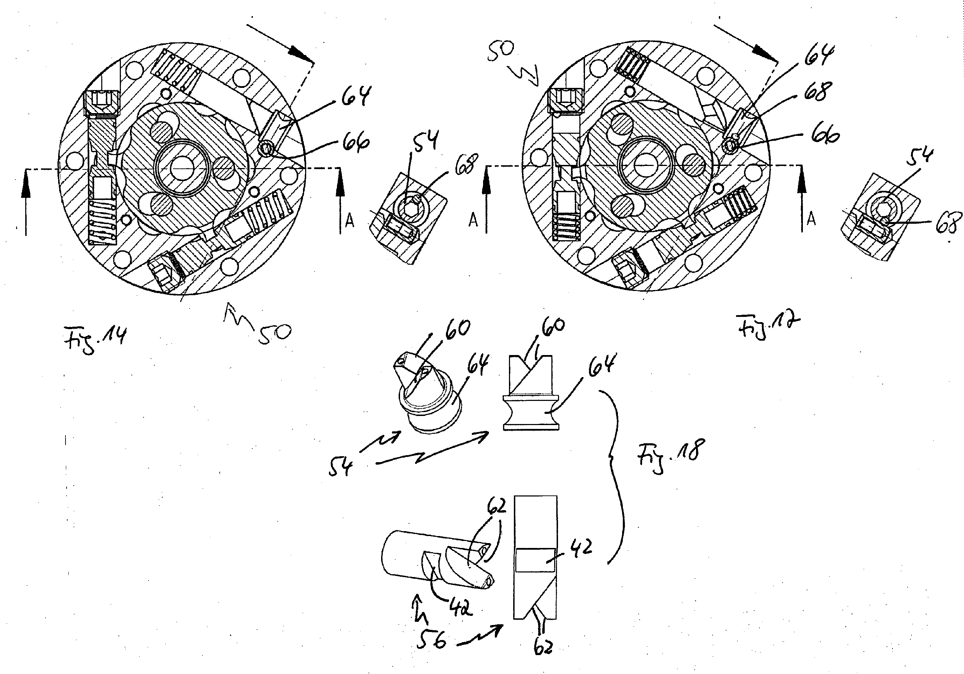

Wie insbesondere aus Figur 18 deutlich wird, weisen die beiden Kolbenabschnitte 54 und 56 einander zugewandte und aneinander anliegende, schräg zu deren Mittellängsachsen verlaufende Kontaktabschnitte 60 und 62 auf. Ferner wird deutlich, dass der Stellkolbenabschnitt 56 zur Verdrehsicherung eine quer zu dessen Längsachse verlaufenden Einschnitt 42 aufweist, der mit einer Nase 44 des Treibrings 24 zusammenwirkt.

Zur Verdrehführung des ersten Stellkolbenabschnitts 54 sieht dieser eine umlaufende Ringausbuchtung 64 vor, in welche ein gehäuseseitiger, parallel zur Mittellängsachse 26 angeordneter Anschlagzapfen 66 ragt. Zur Begrenzung der Verdrehung des Stellkolbenabschnitts 54 ist bei der gezeigten Ausführungsform vorgesehen, dass in der Ringausbuchtung 64 ein sich in radialer Richtung abstehender Abschnitt 68, beispielsweise in Form einer eingepressten Kugel, vorgesehen ist. In der Verdrehendlage schlägt dieser Abschnitt 68 an dem Anschlagzapfen 66 an, wie in den Figuren 15 und 17 dargestellt.

Beim Verdrehen des Stellkolbenabschnitts 54 wird folglich, ausgehend von der Verriegelungslage wie sie in der Figur 12 dargestellt ist, der Stellkolbenabschnitt 56 entgegen der Federbeaufschlagung der Feder 38 entlang dessen Längsachse verlagert. Aufgrund der Bewegungskopplung des Stellkolbens 52 mit den anderen Stellkolben 36 über den Treibring 24 werden auch diese anderen Stellkörper 36 jeweils entgegen ihrer Federbeaufschlagung bewegt, bis die in den Figuren 15, 16 und 17 dargestellte Freigabelage erreicht ist. Für den Fall, dass das System keine Selbsthemmung aufweist, wird dann, wenn am Stellkörperabschnitt 54 kein Drehmoment mehr zur Verfügung gestellt wird, der Treibring 24 derart zurückverdreht, dass die Spannschieber 22 in ihre Verriegelungslage, wie sie in Figur 12, 13 und 14 dargestellt ist, zurückkehren.

## Patentansprüche

1. Nullpunktspannsystem (10, 50), mit einem Gehäuse(12), mit einem Spannbolzen (20), mit einer im Gehäuse (12) vorgesehenen Spannaufnahme (18) zur Aufnahme des Spannbolzens (20), mit in radialer Richtung hin zu einer Mittellängsachse (26), im Gehäuse (12) geführt verlagerbaren Verrieglungskörpern (22), die in einer radial inneren Verriegelungslage gegen den in der Spannaufnahme (18) vorhandenen Spannbolzen (20) so wirken, dass ein am Spannbolzen (20) anordenbares Trägerteil in axialer Richtung gegen das Gehäuse beaufschlagt wird, und mit einem die Verrieglungskörper (22) betätigenden Stellglied, **dadurch gekennzeichnet, dass** das Stellglied als ein um die Mittellängsachse (26) verdrehbar angeordneter Treibring (24) ausgebildet ist, dass zum Verdrehen des Treibrings (24) wenigstens ein mit dem Treibring (24) bewegungsgekoppelter, in seiner Längsrichtung verlagerbarer Stellkolben (36, 52) vorgesehen ist, wobei der wenigstens eine Stellkolben (36, 52) derart federbeaufschlagt ist, dass die Verrieglungskörper (22) in die Verriegelungslage gedrängt werden.

2. Nullpunktspannsystem (10, 50) nach Anspruch 1, **dadurch gekennzeichnet, dass** der Stellkolben (36, 52) wenigstens im Wesentlichen tangential zu einer um die Mittellängsachse (26) verlaufenden Kreisbahn angeordnet ist.

3. Nullpunktspannsystem (10, 50) nach einem der vorhergehenden Ansprüche, **dadurch gekennzeichnet, dass** der Treibring (24), die Verrieglungskörper (22) und/oder der wenigstens eine Stellkolben (36, 52) wenigstens im Wesentlichen in einer senkrecht zur Mittellängsachse (26) verlaufenden Ebene liegen.

4. Nullpunktspannsystem (10, 50) nach einem der vorhergehenden Ansprüche, **dadurch gekennzeichnet, dass** der wenigstens eine Stellkolben (36, 52) bzw. der Treibring (24) einen quer zu dessen Längsachse verlaufenden Einschnitt (42) bzw. eine mit dem Einschnitt (42) zusammenwirkende, in radialer Richtung überstehende Nase (44) zur Bewegungskopplung des Stellkolbens (36, 52) mit dem Treibrings (24) aufweist.

5. Nullpunktspannsystem (50) nach einem der vorhergehenden Ansprüche, **dadurch gekennzeichnet, dass** der wenigstens eine Stellkolben (36, 52) zu dessen axialer Verlagerung mechanisch betätigbar ist.

6. Nullpunktspannsystem (50) nach einem der vorhergehenden Ansprüche, **dadurch gekennzeichnet, dass** der Stellkolben (52) einen ersten, um dessen Längsachse verdrehbaren und in seiner Axiallage gesicherten Stellkolbenabschnitt (54) und einen zweiten, um dessen Drehachse verdrehgesicherten und in seiner Axiallage verlagerbaren Stellkolbenabschnitt (56) derart aufweist, dass beim Verdrehen des ersten Stellkolbenabschnitts (54) der zweite Stellkolbenabschnitt (56) axial verlagert wird.

7. Nullpunktspannsystem (10, 50) nach einem der vorhergehenden Ansprüche, **dadurch gekennzeichnet, dass** der wenigstens eine Stellkolben (36, 52) eine Druckraum (40) begrenzt, der zur axialer Verlagerung des Stellkolbens (36, 52) pneumatisch oder hydraulisch druckbeaufschlagbar ist.

8. Nullpunktspannsystem (10, 50) nach einem der vorhergehenden Ansprüche, **dadurch gekennzeichnet, dass** die Verrieglungskörper (22) als Spannschieber ausgebildet sind und dass zur Bewegungskopplung von Treibring (24) und Spannschiebern (22) am Treibring (24) bzw. an den Spannschiebern (22) Führungsnuten (30) bzw. in die Führungsnuten (30) eingreifende Nocken (32) derart vorgesehen sind, dass beim Verdrehen des Treibrings (24) die Spannschieber (22) in radialer Richtung bewegt werden.

9. Nullpunktspannsystem (10, 50) nach einem der vorhergehenden Ansprüche, **dadurch gekennzeichnet, dass** die Führungsnuten (30) derart gebogen ausgebildet sind, dass in der Verrieglungslage eine Kraftverstärkung erreicht wird.

10. Nullpunktspannsystem (10, 50) nach einem der vorhergehenden Ansprüche, **dadurch gekennzeichnet, dass** das Gehäuse Führungsabschnitte (34) zur Bewegungsführung der Verrieglungskörper (22), des wenigstens einen Stellkolbens (36, 52) und/oder des Treibrings (24) aufweist.

## Claims

1. A zero point clamping system (10, 50), having a housing (12), having a clamping bolt (20); having a clamp receptacle (18), provided in the housing (12), for receiving the clamping bolt (20); having displaceable locking bodies (22) guided in the housing (12) in the radial direction to a center longitudinal axis (26), which locking bodies, in a radially inner locking position relative to the clamping bolt (20) that is present in the clamp receptacle (18), act in such a way that a carrier part that can be located on the clamping bold (20) is acted upon in the axial direction relative to the housing; and having an actuator that actuates the locking bodies (22), **characterized in that** the actuator is embodied as a driving ring (24) located rotatably about the center longitudinal axis (26); that for rotating the driving ring (24), at least one positioning piston (36, 52) which is displaceable in its longitudinal direction and is coupled in terms of motion with the driving ring (24) is provided, and the at least one positioning piston (36, 52) is spring-loaded in such a way that the locking bodies (22) are forced into the locking position.

2. The zero point clamping system (10, 50) of claim 1, **characterized in that** the positioning piston (36, 52) is located at least substantially tangentially to a circular path extending around the center longitudinal axis (26).

3. The zero point clamping system (10, 50) of one of the foregoing claims, **characterized in that** the driving ring (24), the locking bodies (22) and/or the at least one positioning piston (36, 52) are located at least substantially in a plane extending perpendicular to the center longitudinal axis (26).

4. The zero point clamping system (10, 50) of one of the foregoing claims, **characterized in that** the at least one positioning piston (36, 52) and the driving ring (24) have a notch (42), extending transversely to the longitudinal axis of the driving ring, and a lug (44), cooperating with the notch (42) and protruding in the radial direction, respectively, for coupling the positioning piston (36, 52) in terms of motion with the driving ring (24).

5. The zero point clamping system (50) of one of the foregoing claims, **characterized in that** the at least one positioning piston (36, 52), for its axial displacement, is mechanically actuatable.

6. The zero point clamping system (50) of one of the foregoing claims, **characterized in that** the positioning piston (52) has a first positioning piston portion (54) that is rotatable about the longitudinal axis of the positioning piston and is secured in its axial position and a second positioning piston portion (56) that is secured against relative rotation about the axis of rotation of the positioning piston and is displaceable in its axial position, in such a way that upon rotation of the first positioning piston portion (54), the second positioning piston portion (56) is axially displaced.

7. The zero point clamping system (10, 50) of one of the foregoing claims, **characterized in that** the at least one positioning piston (36, 52) defines a pressure chamber (40), which for axially displacing the positioning piston (36, 52) can be subjected to pressure pneumatically or hydraulically.

8. The zero point clamping system (10, 50) of one of the foregoing claims, **characterized in that** the locking bodies (22) are embodied as tensioning slides; and that for coupling the driving ring (24) and tensioning slides (22) in terms of motion, guide grooves (30) and cams (32) engaging the guide grooves (30) are provided on the driving ring (24) and on the tensioning slides (22), respectively, in such a way that upon rotation of the driving ring (24), the tensioning slides (22) are moved in the radial direction.

9. The zero point clamping system (10, 50) of one of the foregoing claims, **characterized in that** the guide grooves (30) are embodied in curved fashion in such a way that an increase in force in the locking position is achieved.

10. The zero point clamping system (10, 50) of one of the foregoing claims, **characterized in that** the housing has guide portions (34) for guiding the motion of the locking bodies (22), the at least one positioning piston (36, 52), and/or the driving ring (24).

## Revendications

1. Système de serrage point zéro (10, 50) comprenant un boîtier (12), une goupille de serrage (20), un logement de serrage (18) prévu dans le boîtier (12) pour recevoir la goupille de serrage (20), des organes de verrouillage (22) qui peuvent être déplacés de façon guidée dans le boîtier (12) dans le sens radial par rapport à un axe longitudinal médian (26), lesquels organes de verrouillage, dans une position de verrouillage intérieure radiale, agissent contre la goupille de serrage (20) présente dans le logement de serrage (18) de sorte qu'une partie de support pouvant être agencée au niveau de la goupille de serrage (20) est sollicitée dans le sens axial contre le boîtier, et comprenant un actionneur actionnant les organes de verrouillage (22), **caractérisé en ce que** l'actionneur est réalisé sous la forme d'une couronne d'entraînement (24) agencée de façon à pouvoir tourner autour de l'axe longitudinal médian (26), **en ce que** pour faire tourner la couronne d'entraînement (24), il est prévu au moins un piston de commande (36, 52) pouvant être déplacé dans son sens longitudinal et couplé en mouvement avec la couronne d'entraînement (24), ledit au moins un piston de commande (36, 52) étant précontraint de telle sorte que les organes de verrouillage (22) sont poussés en position de verrouillage.

2. Système de serrage point zéro (10, 50) selon la revendication 1, **caractérisé en ce que** le piston de commande (36, 52) est agencé au moins essentiellement de façon tangentielle par rapport à une trajectoire circulaire s'étendant autour de l'axe longitudinal médian (26).

3. Système de serrage point zéro (10, 50) selon l'une des revendications précédentes, **caractérisé en ce que** la couronne d'entraînement (24), les organes de verrouillage (22) et/ou ledit au moins un piston de commande (36, 52) sont situés au moins essentiellement dans un plan s'étendant perpendiculairement à l'axe longitudinal médian (26).

4. Système de serrage point zéro (10, 50) selon l'une des revendications précédentes, **caractérisé en ce que** ledit au moins un piston de commande (36, 52) ou la couronne d'entraînement (24) présente une entaille (42) s'étendant transversalement à son axe longitudinal ou un tenon (44) en saillie dans le sens radial et venant coopérer avec l'entaille (42) pour coupler en mouvement le piston de commande (36, 52) avec la couronne d'entraînement (24).

5. Système de serrage point zéro (50) selon l'une des revendications précédentes, **caractérisé en ce que** ledit au moins un piston de commande (36, 52) peut être actionné mécaniquement pour être déplacé dans le sens axial.

6. Système de serrage point zéro (50) selon l'une des revendications précédentes, **caractérisé en ce que** le piston de commande (52) présente une première section de piston de commande (54) pouvant pivoter autour de son axe longitudinal et fixe dans sa position axiale, et une deuxième section de piston de commande (56) fixe en rotation autour de son axe de rotation et pouvant être déplacée dans sa position axiale, de sorte que lorsque l'on tourne la première section de piston de commande (54), la deuxième section de piston de commande (56) est déplacée axialement.

7. Système de serrage point zéro (10, 50) selon l'une des revendications précédentes, **caractérisé en ce que** ledit au moins un piston de commande (36, 52) délimite une chambre de pression (40) qui peut être mise sous pression de façon pneumatique ou hydraulique pour déplacer axialement le piston de commande (36, 52).

8. Système de serrage point zéro (10, 50) selon l'une des revendications précédentes, **caractérisé en ce que** les organes de verrouillage (22) sont réalisés sous la forme de coulisseaux de serrage, et **en ce que** pour coupler en mouvement la couronne d'entraînement (24) et les coulisseaux de serrage (22), il est prévu sur la couronne d'entraînement (24) ou sur les coulisseaux de serrage (22) des rainures de guidage (30) ou des cames (32) venant s'engager dans les rainures de guidage (30) de telle sorte que lorsqu'on tourne la couronne d'entraînement (24), les coulisseaux de serrage (22) sont déplacés dans le sens radial.

9. Système de serrage point zéro (10, 50) selon l'une des revendications précédentes, **caractérisé en ce que** les rainures de guidage (30) sont réalisées courbées de telle sorte que, en position de verrouillage, on obtient une amplification de la force.

10. Système de serrage point zéro (10, 50) selon l'une des revendications précédentes, **caractérisé en ce que** le boîtier présente des sections de guidage (34) pour guider en déplacement les organes de verrouillage (22), ledit au moins un piston de commande (36, 52) et/ou la couronne d'entraînement (24).
